# EUROPÄISCHE PATENTANMELDUNG

(11) **EP 4 432 088 A1**
(43) Veröffentlichungstag der Anmeldung: **18.09.2024**
(21) Anmeldenummer: 23161485.0
(22) Anmeldetag: 13.03.2023
(51) Int. Cl.: G06F 9/54, G06N 3/045

(54) **COMPUTER-IMPLEMENTIERTES VERFAHREN UND SYSTEM ZUR AUTOMATISIERTEN VERARBEITUNG VON AUFGABEN AUF BASIS KÜNSTLICHER INTELLIGENZ AN EINER EDGE-VORRICHTUNG**

(71) Anmelder: Siemens Aktiengesellschaft, 80333 München (DE)
(72) Erfinder: Schall, Daniel, 2020 Hollabrunn (AT); Kaufmann, Thomas, 1020 Wien (AT); Sündermann, Axel, 1220 Wien (AT)
(74) Vertreter: Siemens Patent Attorneys

(57) **Zusammenfassung**

Computer-implementiertes Verfahren zur automatisierten Verarbeitung von Verarbeitungs-Aufgaben auf Basis künstlicher Intelligenz oder maschinellem Lernen an einer Edge-Vorrichtung, welche mit einer Rechenvorrichtung verbunden ist, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
c) Erzeugen von jeweiligen Verarbeitungs-Vorlagen für eine jeweiligen Verarbeitungs-Aufgabe, umfassend jeweilige Verarbeitungs-Daten und dem jeweiligen, zumindest einem Verarbeitungs-Parameter, durch die Rechenvorrichtung,
d) Bereitstellen der Verarbeitungs-Vorlagen an die Edge-Vorrichtung, durch die Rechenvorrichtung,
e) Ausführen der Verarbeitungs-Vorlagen mithilfe der jeweiligen Verarbeitungs-Parameter durch die Edge-Vorrichtung, und Erhalten von Verarbeitungs-Ergebnissen aus den Verarbeitungs-Vorlagen,
f) Ansteuern zumindest einer technischen Vorrichtung, welche mit der Edge-Vorrichtung verbundenen ist, mit den Verarbeitungs-Ergebnissen, durch die Edge-Vorrichtung.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zur automatisierten Verarbeitung von Verarbeitungs-Aufgaben auf Basis künstlicher Intelligenz oder maschinellem Lernen an einer Edge-Vorrichtung, welche mit einer Rechenvorrichtung verbunden ist.

Die Erfindung betrifft ferner ein Computer-Programm-Produkt und eine computer-implementierte Datenstruktur.

Edge-Geräte werden häufig in einem Fertigungskontext verwendet um Daten zu sammeln und Datenanalyse- und "Machine Learning" (maschinelles Lernen, kurz "ML", )-Aufgaben oder "Artificial Intelligence" (kurz "AI" oder deutsch "künstliche Intelligenz, kurz "KI") Aufgaben auszuführen.

Für eine rasche und effiziente Abarbeitung werden Vorlagen, sogenannte "Templates", verwendet, häufig in Form von Python Programmcodes, in welchen eine vollständige KI-/ML-Pipeline sowohl für Trainings-Aufgaben als auch für Prognose-Aufgaben abgebildet ist. Dabei ist der gesamte Programmcode enthalten, welcher zum Training eines KI-/ML-Modells benötigt wird, ferner umfassend das Laden und Vorverarbeiten (engl. "preprocessing") der Daten und jener Programmcode, welcher zur Ausführung der Prädiktion benötigt wird.

Im Stand der Technik bereitet ein Daten-Wissenschaftler ein Template vor, indem beispielsweise ein vollständiges Jupyter Notebook, ein sehr populäres Entwicklungswerkzeug für Daten-wissenschaftler) entwickelt wird. Das Template wird mithilfe des "template builders" kompiliert und durch ein "VQI backend" veröffentlicht, wodurch das Template beispielsweise automatisch in eine "Visual Quality Inspection" (kurz "VKI") Anwendung integriert wird und einem Domänen Experten bereitgestellt wird.

Der Domänen Experte ist jene Person, die die Anwendung benützt und für die Bereitstellung der Trainingsdaten verantwortlich ist. Der Domänen Experte ist ferner dafür zuständig, das Training eines Datensatz mit einem Template anzustoßen.

Ein Automatisierungsingenieur verteilt das nun trainierte Modell zu der Edge-Vorrichtung.

Es kann häufig der Fall sein, dass die Rolle des Domänen Experten und die des Automatisierungsingenieurs durch dieselbe Person ausgeübt werden.

Durch die manuelle Ausübung dieser Rollen kann es jedoch zu monotonen und zeitintensiven Tätigkeiten kommen, was zu unerwünschten Fehlern führen kann, welche möglicherweise erst nach einem Ressourcen-intensiven Training bemerkt werden und daher zu hohen Folgeaufwänden führen können.

Ferner kann es bei der manuellen Ausübung dieser Rollen dazu kommen, dass mehrere ML-Aufgaben untereinander unkoordiniert an Hardware-Ressourcen zur Bearbeitung übergeben werden und die Hardware die Aufgaben zeitlich nicht optimal abarbeitet.

Sogenannte "Workloads" sind Rechenprozesse, welche eine Aufgabe auszuführen. Workloads können unterschiedlich groß sein und unterschiedlichen Zwecken dienen.

Workloads können kleinere Prozesse sein, oder auch größere Batch-Prozesse, wie das Trainieren eines KI-Modells.

Systeme nach dem Stand der Technik können grob kategorisiert werden in statische und dynamische Workloads.

Statische Workloads bleiben über einen langen Zeitraum relativ konstant und verwenden sehr ähnliche Mengen an Rechenressourcen nach einem festen Zeitplan. Die Hardware an einer Edge kann entsprechend der zu erwartenden statischen Auslastung ausgewählt werden. Es ist nicht erforderlich, das System während der Laufzeit neu zu konfigurieren.

Dynamische Workloads jedoch passen sich jedoch dramatisch an, wenn die Anforderungen steigen. Sie werden auch als temporäre Workloads bezeichnet. Ein dynamischer Workload erfordert mehr Flexibilität und Verfügbarkeit, um effizient ausgeführt zu werden. Ein Beispiel für einen dynamischen Workload ist das Re-Training eines KI-Modells an einer Edge. Möglicherweise sind neue Daten verfügbar, die eine Aktualisierung des Modells erfordern. Diese Aufgaben sind beim Entwurf eines Systems schwer oder gar nicht planbar. Der Benutzer möchte möglicherweise auch mehr Flexibilität haben, um bestimmte Workloads von der Cloud an den Edge zu verschieben.

Derzeit verfügbare Edge-Systeme können dynamische Workloads in Edge- oder Operational Technology"- (kurz "OT") Umgebungen nicht ausreichend verarbeiten. Mit der Verbreitung von KI und ML an einer Edge in großen Umgebungen wird es jedoch unerlässlich sein, solche Workloads effizienter zu handhaben.

Es ist daher Aufgabe der Erfindung ein Verfahren bereitzustellen, mit welchem der Automatisierungsgrad bei der Ausführung von KI-/ML-Processing-Pipelines verbessert werden kann, Fehler durch die menschliche Verarbeitung verringert oder gar vermieden werden, sowie die dynamische Effizienz bei der Abarbeitung verbessert werden kann.

Die Aufgabe der Erfindung wird durch ein Verfahren eingangs genannter Art gelöst, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
c) Erzeugen von jeweiligen Verarbeitungs-Vorlagen für eine jeweilige Verarbeitungs-Aufgabe, umfassend jeweilige Verarbeitungs-Daten und dem jeweiligen, zumindest einem Verarbeitungs-Parameter, durch die Rechenvorrichtung,
d) Bereitstellen der Verarbeitungs-Vorlagen an die Edge-Vorrichtung, durch die Rechenvorrichtung,
e) Ausführen der Verarbeitungs-Vorlagen mithilfe der jeweiligen Verarbeitungs-Parameter durch die Edge-Vorrichtung, und Erhalten von Verarbeitungs-Ergebnissen aus den Verarbeitungs-Vorlagen,
f) Ansteuern zumindest einer technischen Vorrichtung, welche mit der Edge-Vorrichtung verbundenen ist, mit den Verarbeitungs-Ergebnissen, durch die Edge-Vorrichtung.

In dieser ersten Lösung wird eine technische Vorrichtung an einer Edge-Vorrichtung mit erfindungsgemäß verarbeiteten Daten angesteuert.

Unter Verarbeitungs-Daten werden im vorliegenden Zusammenhang jene Daten verstanden, welche dazu nötig sind, eine Verarbeitungs-Aufgabe zu erledigen. Dies sind beispielsweise Programmcodes für die KI-/ML-Aufgabe, welche eine Verarbeitungs-Aufgabe beschreibt, ein oder mehrere KI-/ML-Modelle, welche beispielsweise eine technische Vorrichtung oder eine Sensor-Vorrichtung beschreibt, sowie dazugehörige Trainingsdaten und/oder Testdaten.

Unter Ausführungs-Parametern werden im vorliegenden Zusammenhang jene Parameter verstanden, welche die Ausführung der Verarbeitungs-Aufgaben beziehungsweise der Verarbeitungs-Daten an der Edge-Vorrichtung beschreiben, spezifizieren oder vorgeben, beispielsweise indem Grenzwerte oder Betriebswerte für eine verbundene technische Vorrichtung oder Sensor-Vorrichtung definiert werden, oder auch, um beispielsweise eine gemeinsame Verarbeitung eine Menge an Verarbeitungs-Aufgaben an der Edge-Vorrichtung zu beschreiben, wie durch Anwendung von Prioritäten bei der Verarbeitung, oder die Nutzung spezieller Ressourcen an der Edge-Vorrichtung.

Die technische Vorrichtung kann beispielsweise eine CNC-Fräsmaschine, eine Pumpe oder dergleichen sein. Die Ansteuerung erfolgt unter Verwendung eines Modells auf Basis künstlicher Intelligenz oder maschinellem Lernen.

Eine Verarbeitungs-Aufgabe kann beispielsweise eine Durchführung einer Fräsoperation durch eine CNC-Fräsmaschine sein, wobei durch Anwendung eine KI-/ML-Modells um eine effiziente Erledigung der Verarbeitungs-Aufgabe ermöglicht wird.

Eine Verarbeitungs-Aufgabe kann beispielsweise auch der vorausschauende Betrieb einer Pumpe mit dem Ziel einer Optimierung von Wartungsintervallen durch Anwendung eines KI-/ML-Modells sein.

Prognostizierte oder durch Anwendung des Modells optimierte Steuerbefehle für die technische Vorrichtung werden als Verarbeitungs-Ergebnisse erzeugt und erhalten, und weiter angewendet.

Die KI-Codes können dabei ML/KI-Modelle, Trainings-Daten oder Analyse-Daten, welche auf ein trainiertes Modell beispielweise zur Prädiktion angewendet werden, oder Daten zum maschinellen Lernen wie in föderierten Systemen, umfassen.

Die Anwendung von Programmcodes für maschinelles Lernen oder für künstliche Intelligenz wird im vorliegenden Zusammenhang als äquivalent angesehen.

Durch das Verfahren wird erreicht, dass eine kompakte Datenstruktur durch eine Verarbeitungs-Vorlage gebildet wird, welche es einer dafür angepassten Verarbeitungs-Ausführungseinheit an der Edge-Vorrichtung auf einfache und effiziente Weise erlaubt, mehrerer Verarbeitungs-Vorlagen auszuführen und KI-Berechnungen durchzuführen, welche auf die Umgebungsbedingungen an der Edge-Vorrichtung angepasst sind.

Verarbeitungsfehler durch falsche Benutzereingaben können reduziert werden, da die Anpassung einer Verarbeitung an die Edge-Vorrichtung automatisiert erfolgen kann.

Durch das Verfahren wird eine sehr einfach implementierbare Definition von Prozess-Pipelines erreicht, welche technische Eigenschaften von Edge-Vorrichtungen berücksichtigt.

Es können sowohl KI-/ML-Trainings-Aufgaben, als auch ML-/KI-Inferenz-Aufgaben effizient abgearbeitet werden.

Es können durch das Verfahren betriebsspezifische Parameter und entsprechende Beschränkungen einer Edge-Vorrichtung berücksichtigt werden, indem Meta-Informationen mit Funktionen maschinellen Lernens oder künstlicher Intelligenz innerhalb einer Verarbeitungs-Vorlage verknüpft werden, wie Pre-Processing und Post-Processing, Training und Prädiktion.

Durch eine derartige Verarbeitung an einer Edge-Vorrichtung können dazu nicht-lineare Optimierungs-Verfahren eingesetzt werden, um die Edge-Vorrichtung hinsichtlich ihrer Ressourcen optimal zu betreiben.

Ferner können Verarbeitungs-Aufgaben Konfigurationsspezifisch erledigt werden, indem Konfigurations-Angaben oder Angaben zur Daten-Aggregation in Verarbeitungs-Vorlagen entsprechend berücksichtigt werden.

Die Aufgabe der Erfindung wird durch auch ein Verfahren eingangs genannter Art gelöst, wobei folgende Schritte verarbeitet werden:
a) Erfassen von Sensordaten durch eine Sensor-Vorrichtung, welche mit der Edge-Vorrichtung verbundenen ist, und Bereitstellen der Sensordaten an die Rechenvorrichtung,
b) Bereitstellen einer Menge von Verarbeitungs-Aufgaben in Form Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung,
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung berücksichtigt, durch die Rechenvorrichtung,
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung,
e) Bereitstellen der Verarbeitungs-Vorlagen an die Edge-Vorrichtung, durch die Rechenvorrichtung,
f) Ausführen der Verarbeitungs-Vorlagen mithilfe der jeweiligen Verarbeitungs-Parameter durch die Edge-Vorrichtung, und Erhalten von Verarbeitungs-Ergebnissen für die Sensordaten aus den Verarbeitungs-Vorlagen.

In dieser zweiten, alternativen Lösung werden Sensordaten von einer Sensor-Vorrichtung an einer Edge-Vorrichtung erfindungsgemäß verarbeitet.

Die Sensor-Vorrichtung kann beispielsweise ein optischer Sensor, ein Video-Sensor eines Systems zu "Visual Quality Inspection" von erzeugten Produkten auf einem Förderband eines Produktionssystems, ein Temperatur-Sensor eines Fräskopfes einer CNC-Fräsmaschine, ein Drehzahl-Sensor einer Pumpe oder dergleichen sein, wobei die Sensor-Vorrichtung beispielsweise Eigenschaften von erzeugten oder bearbeiteten Produkten als Sensordaten erfasst.

Inferenzen in den Sensordaten können durch Anwendung eines KI-/ML-Modells der entsprechenden Verarbeitungs-Aufgabe erkannt werden.

Beide Lösungen dienen derselben erfindungsgemäßen, technischen Aufgabe, nämlich die effiziente Verarbeitung von Verarbeitungs-Aufgaben an einer Edge-Vorrichtung durch Anwendung von Verarbeitungs-Vorlagen. Dementsprechend gelten dieselben Vorzüge des Verfahrens.

In einer Weiterbildung der Erfindung ist es vorgesehen, dass der zumindest eine Verarbeitungs-Parameter durch eine Funktions-Dekorierung als Python-Design-Muster gebildet ist.

Dadurch kann auf einfache Weise eine Implementierung erreicht werden, welche von Python durch sogenannte "Dekoratoren" unterstützt wird.

In einer Weiterbildung der Erfindung ist es vorgesehen, dass der zumindest eine Verarbeitungs-Parameter eine zeitliche Information umfasst, beispielsweise eine Verarbeitungs-Priorität, eine vorbestimmte Start-Zeit oder End-Zeit für die Verarbeitung, ein Verarbeitungs-Zeitbereich oder eine Verarbeitungs-Wiederholung.

Dadurch wird erreicht, dass die zeitliche Ausführung der Verarbeitung an der Edge-Vorrichtung vorteilhaft angepasst werden kann und die Edge-Vorrichtung insgesamt effizienter arbeiten kann.

In einer Weiterbildung der Erfindung ist es vorgesehen, dass der zumindest eine Verarbeitungs-Parameter eine Information hinsichtlich eines Auslöse-Kriteriums für die Verarbeitung an der Edge-Vorrichtung umfasst, beispielsweise eine logische oder manuelle Auslöse-Bedingung, oder der Empfang einer auslösenden Nachricht, welche von der Edge-Vorrichtung durch eine entsprechende, mitumfasste Empfangsvorrichtung empfangen wird.

Dadurch wird erreicht, dass die zeitliche Ausführung der Verarbeitung an der Edge-Vorrichtung vorteilhaft angepasst werden kann und die Edge-Vorrichtung insgesamt effizienter arbeiten kann.

Eine Auslöse-Nachricht kann beispielsweise über das MQTT-Protokoll ("Message Queuing Telemetry Transport") oder ZeroMQ übermittelt werden.

MQTT ist ein offenes Netzwerkprotokoll für "Machine-to-Machine"-Kommunikation, welches die Übertragung von Telemetriedaten in Form von Nachrichten zwischen Geräten ermöglicht, trotz hoher Verzögerungen oder beschränkter Netzwerke.

ZeroMQ ist eine asynchrone Nachrichtenaustauschbibliothek für "high-throughput computing", die speziell auf Verteilte Systeme oder gleichzeitige Ausführung in verschiedenen Systemen entwickelt wurde. Es ist eine "Message Queue", benötigt aber im Gegensatz zu "Message Oriented Middleware" keinen dedizierten "Message Broker".

In einer Weiterbildung der Erfindung ist es vorgesehen, dass der zumindest eine Verarbeitungs-Parameter eine Information hinsichtlich einer Ressourcen-Bedingung für die Verarbeitung an der Edge-Vorrichtung umfasst, beispielsweise eine Prozessor-Art an der Edge-Vorrichtung wie eine GPU oder eine spezielle CPU, ein erforderlicher Speicher-Bedarf oder Speicher-Zugriff wie lokaler Speicher oder Cloud-Speicher.

Dadurch wird erreicht, dass die Ausführung der Verarbeitung an der Edge-Vorrichtung hinsichtlich der Ressourcen vorteilhaft angepasst werden kann und die Edge-Vorrichtung insgesamt effizienter arbeiten kann.

In einer Weiterbildung der Erfindung ist es vorgesehen, dass der zumindest eine Verarbeitungs-Parameter eine Information hinsichtlich einer Konfiguration für die Verarbeitung an der Edge-Vorrichtung umfasst, beispielsweise eine Kombination von KI-Code, Software und Ressourcen an der Edge-Vorrichtung.

Dadurch wird erreicht, dass die Ausführung der Verarbeitung an der Edge-Vorrichtung hinsichtlich der Konfiguration von Software und Hardware vorteilhaft angepasst werden kann und die Edge-Vorrichtung insgesamt effizienter arbeiten kann.

Die erfindungsgemäße Aufgabe wird auch durch ein System zur automatisierten Verarbeitung von Verarbeitungs-Aufgaben auf Basis künstlicher Intelligenz oder maschinellem Lernen an einer Edge-Vorrichtung gelöst, umfassend eine Rechenvorrichtung mit einem Prozessor und einem Speicher und eine verbundene technische Vorrichtung oder Sensor-Vorrichtung, wobei das System dazu eingerichtet ist, das erfindungsgemäße Verfahren auszuführen.

In einer Weiterbildung der Erfindung ist es vorgesehen, dass die Rechenvorrichtung von der Edge-Vorrichtung umfasst ist.

Dadurch wird das System zur Ausführung des Verfahrens vereinfacht und die Komplexität reduziert.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die erfindungsgemäße Aufgabe wird auch durch eine computer-implementierte Datenstruktur zur automatisierten Verarbeitung von Verarbeitungs-Aufgaben auf Basis künstlicher Intelligenz oder maschinellem Lernen an einer Edge-Vorrichtung in Form einer Verarbeitungs-Vorlage zur Verwendung im erfindungsgemäßen Verfahren gelöst, umfassend Verarbeitungs-Daten, aufweisend Programmcodes, Modelle, Trainingsdaten und/oder Testdaten, und zugehörigen Ausführungs-Parametern, und zumindest einem Verarbeitungs-Parameter, welcher die Ausführung einer Menge von Verarbeitungs-Aufgaben durch eine Edge-Vorrichtung beschreibt.

In einer Weiterbildung der Erfindung ist es vorgesehen, dass die Datenstruktur zumindest ein, bevorzugt zumindest zwei oder drei, besonders bevorzugt zumindest vier oder fünf der nachfolgenden Parameter enthält:
- Daten zu Orchestrierung von Verarbeitungs-Vorlagen an der Edge-Vorrichtung,
- Artefakte bezüglich einer Verarbeitungs-Aufgabe,
- Meta-Daten zu Verarbeitungs-Daten,
- Angaben zum zeitlichen Verlauf einer Verarbeitungs-Aufgabe,
- Angaben zu Nachrichten zur Steuerung einer Verarbeitungs-Aufgabe
- Ressourcen der Edge-Vorrichtung,
- Angaben zu Ressourcen der Edge-Vorrichtung, und/oder der verbundenen technischen Vorrichtung, und/oder der Sensor-Vorrichtung.

Die Erfindung wird nachfolgend anhand eines in den beigeschlossenen Zeichnungen dargestellten Ausführungsbeispiels näher erläutert. In den Zeichnungen zeigt:
- Fig. 1: ein Beispiel für ein Flussdiagramm des erfindungsgemäßen Verfahrens,
- Fig. 2: ein erstes Ausführungsbeispiel für das erfindungsgemäße System,
- Fig. 3: ein zweites Ausführungsbeispiel für das erfindungsgemäße System,
- Fig. 4-6: Ausführungsbeispiele für Verarbeitungs-Vorlagen in Form von Python-Programmcodes.

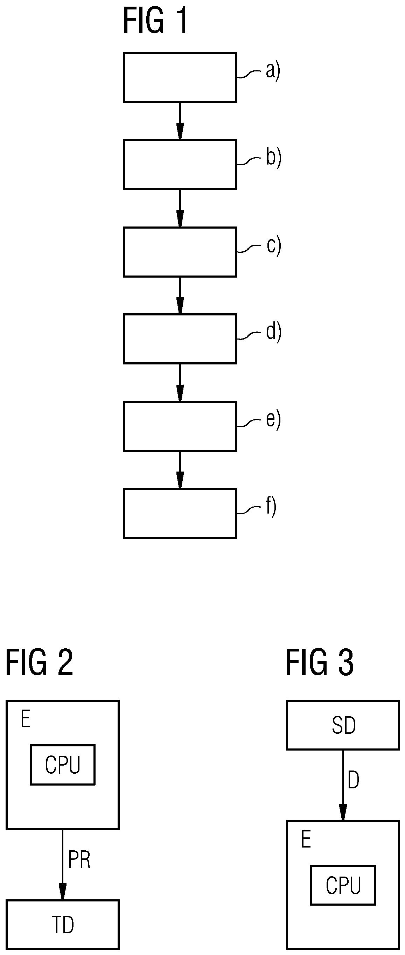

**Fig. 1** stellt ein Beispiel für ein Flussdiagramm des erfindungsgemäßen Verfahrens dar.

Das Verfahren dient zur automatisierten Verarbeitung von Verarbeitungs-Aufgaben auf Basis künstlicher Intelligenz an einer Edge-Vorrichtung E, welche mit einer Rechenvorrichtung CPU verbunden ist.

Das Verfahren ist in zumindest einem Schritt computerimplementiert.

Das Verfahren kann in zwei Varianten dargestellt werden.

In der ersten Form wird eine technische Vorrichtung TD, welche mit der Edge-Vorrichtung E verbundenen ist, mit ermittelten Verarbeitungs-Ergebnissen PR, durch die Edge-Vorrichtung E angesteuert.

Folgende Schritte werden dabei ausgeführt:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung CPU,
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung E berücksichtigt, durch die Rechenvorrichtung CPU,
c) Erzeugen von jeweiligen Verarbeitungs-Vorlagen TP für eine jeweilige Verarbeitungs-Aufgabe, umfassend jeweilige Verarbeitungs-Daten und dem jeweiligen, zumindest einem Verarbeitungs-Parameter, durch die Rechenvorrichtung CPU,
d) Bereitstellen der Verarbeitungs-Vorlagen an die Edge-Vorrichtung E, durch die Rechenvorrichtung CPU,
e) Ausführen der Verarbeitungs-Vorlagen mithilfe der jeweiligen Verarbeitungs-Parameter durch die Edge-Vorrichtung E, und Erhalten von Verarbeitungs-Ergebnissen PR aus den Verarbeitungs-Vorlagen TP,
f) Ansteuern zumindest einer technischen Vorrichtung TD, welche mit der Edge-Vorrichtung E verbundenen ist, mit den Verarbeitungs-Ergebnissen PR, durch die Edge-Vorrichtung E.

In der zweiten Form werden Sensordaten durch eine Sensor-Vorrichtung SD, welche mit der Edge-Vorrichtung E verbundenen ist, erfasst und die Sensordaten werden an die Rechenvorrichtung CPU zur weiteren Verarbeitung bereitgestellt.

Folgende Schritte werden dabei ausgeführt:
a) Erfassen von Sensordaten D durch eine Sensor-Vorrichtung SD, welche mit der Edge-Vorrichtung E verbundenen ist, und Bereitstellen der Sensordaten an die Rechenvorrichtung CPU,
b) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung CPU,
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung E berücksichtigt, durch die Rechenvorrichtung CPU,
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung CPU,
e) Bereitstellen der Verarbeitungs-Vorlagen an die Edge-Vorrichtung E, durch die Rechenvorrichtung CPU,
f) Ausführen der Verarbeitungs-Vorlagen mithilfe der jeweiligen Verarbeitungs-Parameter PP durch die Edge-Vorrichtung E, und Erhalten von Verarbeitungs-Ergebnissen PR für die Sensordaten aus den Verarbeitungs-Vorlagen.

Im Verfahren wird eine Datenstruktur zur automatisierten Verarbeitung von Verarbeitungs-Aufgaben auf Basis künstlicher Intelligenz oder maschinellem Lernen an einer Edge-Vorrichtung E in Form der Verarbeitungs-Vorlage verwendet.

Die Datenstruktur ist computer-implementierte und umfasst Verarbeitungs-Daten, aufweisend Programmcodes, Modelle, Trainingsdaten und/oder Testdaten, und zugehörigen Ausführungs-Parametern und Verarbeitungs-Parameter.

Die Verarbeitungs-Vorlage kann beispielsweise folgende Daten in Form einer entsprechenden Datenstruktur umfassen:
- Daten zu Orchestrierung mehrerer Verarbeitungs-Vorlagen an der Edge-Vorrichtung E,
- Artefakte eine KI-/ML-Aufgabe betreffend, also bezüglich einer Verarbeitungs-Aufgabe,
- Angaben zu Daten, welche erzeugt werden, wie zum Ansteuern einer technischen Vorrichtung TD oder welche verarbeitet werden, wie Sensordaten D, also Meta-Daten zu Verarbeitungs-Daten,
- Angaben zum zeitlichen Verlauf einer Verarbeitungs-Aufgabe, wie Angaben zum Start oder zur Beendigung einer Instanz beziehungsweise Verarbeitungs-Aufgabe,
- Angaben zu Nachrichten zur Steuerung einer Instanz beziehungsweise Verarbeitungs-Aufgabe,
- Angaben zu Ressourcen der Edge-Vorrichtung E,
- Angaben zu Ressourcen der Edge-Vorrichtung E, und/oder der verbundenen technischen Vorrichtung TD, und/oder der Sensor-Vorrichtung SD.

Die Datenstruktur kann zumindest einen, bevorzugt zumindest zwei oder drei, besonders bevorzugt zumindest vier oder fünf der Parameter enthalten.

Außerdem kann die Verarbeitungs-Vorlage Optimierungen für eine Ausführung durch die Edge-Vorrichtung E vorsehen:
- Eine Kennung für eine Verarbeitungs-Vorlage kann verwendet werden, um der Edge-Vorrichtung E eine einfache Identifizierung und Zuweisung zu ermöglichen.
- Eine Markierung (engl. "flag") kann verwendet werden, um der Edge-Vorrichtung E eine einfache Zuweisung zu einem speziellen Prozessor, wie einer GPU zu ermöglichen.
- Eine Start-Zeit kann verwendet werden, um der Edge-Vorrichtung E eine einfache Zuweisung zur Verarbeitung an einer vorbestimmten Zeit zu erlauben. Dies kann auch in Form einer "frühestmöglichen" Start-Zeit" erfolgen.
- Eine End-Zeit kann verwendet werden, um der Edge-Vorrichtung E eine einfache Zuweisung zur Verarbeitung an einer vorbestimmten Zeit zu erlauben, um eine rechtzeitige Erledigung zur gewünschten End-Zeit sicherzustellen.
- Eine Zeitspanne (engl. "slack") kann vorgesehen werden, um der Edge-Vorrichtung E eine flexible Planung einer Verarbeitung zweier verbundener, aufeinander folgender Verarbeitungs-Vorlagen zu erlauben, wobei beide Verarbeitungs-Vorlagen einen gemeinsamen Zugriff auf Ressourcen benötigen, und entsprechende Optimierungs-Strategien zur Auflösung von derartigen Konflikten angewandt werden können.
- Eine Konflikt-Angabe kann beispielsweise eine Konflikt-Matrix umfassen, durch welche das Verhalten in einem Zugriffs-Konflikt auf eine gemeinsame Ressource beispielsweise durch Einsatz von Prioritäten oder Optimierungs-Strategien zur Auflösung von Konflikten definiert sind.

Für Optimierungen kann an der Edge-Vorrichtung E beispielsweise ein Verfahren nach der Methode der allgemeinen reduzierten Gradienten (engl. "Generalized Reduced Gradient", kurz GRG) angewandt werden.

Das GRG-Verfahren ist eine Erweiterung der Methode mit reduziertem Gradienten, um nichtlineare Ungleichheitsbedingungen zu berücksichtigen. Bei diesem Verfahren wird eine Suchrichtung gefunden, so dass für jede kleine Bewegung die aktuellen aktiven Beschränkungen genau aktiv bleiben.

Andere Optimierungs-Verfahren sind ebenso möglich, wie beispielsweise der Evolutions-Algorithmus, welcher ein generischer populationsbasierter metaheuristischer Optimierungs-Algorithmus ist.

**Fig. 2** zeigt ein erstes Ausführungsbeispiel für das erfindungsgemäße System nach Anspruch 1, wobei die technische Vorrichtung TD, welche mit der Edge-Vorrichtung E verbunden ist, durch die Edge-Vorrichtung E mit den Verarbeitungs-Ergebnissen PR angesteuert wird.

Die Rechenvorrichtung CPU kann von der Edge-Vorrichtung E umfasst sein.

Es gelten auch die Ausführungen zur Fig. 1.

**Fig. 3** zeigt ein zweites Ausführungsbeispiel für das erfindungsgemäße System nach Anspruch 2, wobei Sensordaten D durch die Sensor-Vorrichtung SD, welche mit der Edge-Vorrichtung E verbundenen ist, erfasst werden und die Sensordaten D an die Rechenvorrichtung CPU bereitgestellt werden.

Die Rechenvorrichtung CPU kann von der Edge-Vorrichtung E umfasst sein.

Es gelten auch die Ausführungen zur Fig. 1.

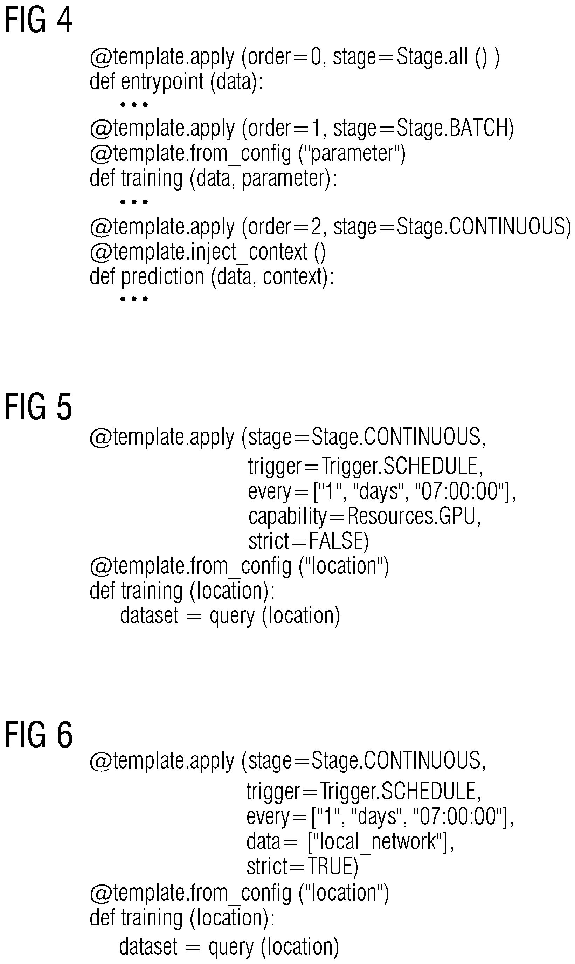

**Fig. 4** stellt Ausführungsbeispiele für Verarbeitungs-Vorlagen in Form von Python-Programmcodes dar.

Der Verarbeitungs-Parameter kann durch eine Funktions-Dekorierung als Python-Design-Muster gebildet sein.

Der Verarbeitungs-Parameter kann eine zeitliche Information umfassen.

Beispielsweise kann eine Verarbeitungs-Priorität, eine vorbestimmte Start-Zeit oder End-Zeit für die Verarbeitung, ein Verarbeitungs-Zeitbereich oder eine Verarbeitungs-Wiederholung enthalten sein.

Ferner kann der Verarbeitungs-Parameter eine Information bezüglich der Abarbeitung an der Edge-Vorrichtung E aufweisen, wie ein Hinweis auf eine allgemeine Verarbeitung (engl. "all), eine Stapel-Verarbeitung (engl. "Batch") oder ein sich wiederholende Verarbeitung (engl. "continuius").

Ebenso kann der Verarbeitungs-Parameter eine Information bezüglich einer Priorität bei der Abarbeitung an der Edge-Vorrichtung E aufweisen, wie durch eine Ordnungszahl (engl. "order") oder Priorität ausgedrückt werden kann.

**Fig. 5** stellt Ausführungsbeispiele für Verarbeitungs-Vorlagen in Form von Python-Programmcodes dar.

Der Verarbeitungs-Parameter kann eine Information hinsichtlich eines Auslöse-Kriteriums für die Verarbeitung an der Edge-Vorrichtung (E) umfassen.

Beispielsweise kann eine logische oder manuelle Auslöse-Bedingung, oder der Empfang einer auslösenden Nachricht, welche von der Edge-Vorrichtung E durch eine entsprechende, mitumfasste Empfangsvorrichtung empfangen wird, enthalten sein.

**Fig. 6** stellt Ausführungsbeispiele für Verarbeitungs-Vorlagen in Form von Python-Programmcodes dar.

Der Verarbeitungs-Parameter kann eine Information hinsichtlich einer Ressourcen-Bedingung für die Verarbeitung an der Edge-Vorrichtung E umfassen.

Beispielsweise kann eine spezielle Prozessor-Art an der Edge-Vorrichtung E wie eine GPU (Grafik-Prozessor) oder eine spezielle CPU (Mikroprozessor mit einem Speicher), ein erforderlicher Speicher-Bedarf oder Speicher-Zugriff wie lokaler Speicher oder Cloud-Speicher, enthalten sein.

Ferner kann der Verarbeitungs-Parameter eine Information hinsichtlich einer Konfiguration für die Verarbeitung an der Edge-Vorrichtung E umfassen.
beispielsweise kann eine Kombination von Verarbeitungs-Daten, Software und Ressourcen an der Edge-Vorrichtung E enthalten sein.

Das Dekorator-Argument "Trigger.SCHEDULE" teilt für die Verarbeitung durch die Edge-Vorrichtung E mit, dass die Verarbeitung täglich um 7:00 Uhr erfolgen soll.

Der Dekorator-Ausdruck "capability=Ressources.GPU" teilt für die Verarbeitung durch die Edge-Vorrichtung E mit, dass die Verarbeitung ausschließlich durch einen Grafik-

Prozessor (GPU) erfolgen soll, beziehungsweise die Verarbeitung nur dann erfolgen soll, wenn die GPU verfügbar ist, ansonsten soll beispielsweise abgewartet werden, bis die GU verfügbar ist.

Wenn zusätzlich das Argument "strict=TRUE" gesetzt ist, so soll die Funktion mit einem Fehler abgebrochen werden, falls keine GPU verfügbar ist.

Der Dekorator-Ausdruck "data=local network" teilt für die Verarbeitung durch die Ende-Vorrichtung E mit, dass die Verarbeitung nur dann erfolgen soll, wenn ein Daten-Netzwerk verfügbar ist.

Wenn zusätzlich das Argument "strict=TRUE" gesetzt ist, so soll die Funktion mit einem Fehler abgebrochen werden, falls kein Netzwerk wie eine Cloud verfügbar ist.

### Bezugszeichenliste:

- CPU: Prozessor mit Speicher
- D: Sensordaten
- E: Edge-Vorrichtung
- PR: Verarbeitungs-Ergebnis
- SD: Sensor-Vorrichtung
- TD: technische Vorrichtung, technisches Gerät

## Patentansprüche

1. Computer-implementiertes Verfahren zur automatisierten Verarbeitung von Verarbeitungs-Aufgaben auf Basis künstlicher Intelligenz oder maschinellem Lernen an einer Edge-Vorrichtung (E), welche mit einer Rechenvorrichtung (CPU) verbunden ist, wobei folgende Schritte verarbeitet werden:
a) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Aufgaben an der Edge-Vorrichtung beschreiben, an die Rechenvorrichtung (CPU),
b) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung (E) berücksichtigt, durch die Rechenvorrichtung (CPU),
c) Erzeugen von jeweiligen Verarbeitungs-Vorlagen für eine jeweilige Verarbeitungs-Aufgabe, umfassend jeweilige Verarbeitungs-Daten und dem jeweiligen, zumindest einem Verarbeitungs-Parameter, durch die Rechenvorrichtung (CPU),
d) Bereitstellen der Verarbeitungs-Vorlagen an die Edge-Vorrichtung (E), durch die Rechenvorrichtung (CPU),
e) Ausführen der Verarbeitungs-Vorlagen mithilfe der jeweiligen Verarbeitungs-Parameter durch die Edge-Vorrichtung (E), und Erhalten von Verarbeitungs-Ergebnissen aus den Verarbeitungs-Vorlagen,
f) Ansteuern zumindest einer technischen Vorrichtung (TD), welche mit der Edge-Vorrichtung (E) verbundenen ist, mit den Verarbeitungs-Ergebnissen, durch die Edge-Vorrichtung (E).

2. Computer-implementiertes Verfahren zur automatisierten Verarbeitung von Verarbeitungs-Aufgaben auf Basis künstlicher Intelligenz oder maschinellem Lernen an einer Edge-Vorrichtung (E), welche mit einer Rechenvorrichtung (CPU) verbunden ist, wobei folgende Schritte verarbeitet werden:
a) Erfassen von Sensordaten durch eine Sensor-Vorrichtung (SD), welche mit der Edge-Vorrichtung (E) verbundenen ist, und Bereitstellen der Sensordaten an die Rechenvorrichtung (CPU),
b) Bereitstellen einer Menge von Verarbeitungs-Aufgaben mit Verarbeitungs-Daten, umfassend Programmcodes, Modelle, Trainingsdaten und/oder Testdaten, und zugehörigen Ausführungs-Parametern, welche die Ausführung der Verarbeitungs-Daten an der Edge-Vorrichtung beschreiben, an die Rechenvorrichtung (CPU),
c) Bestimmen von zumindest einem Verarbeitungs-Parameter für die jeweiligen Verarbeitungs-Daten aus den Ausführungs-Parametern, welcher die Ausführung der Menge von Verarbeitungs-Aufgaben durch eine Edge-Vorrichtung (E) berücksichtigt, durch die Rechenvorrichtung (CPU),
d) Erzeugen von jeweiligen Verarbeitungs-Vorlagen für eine jeweilige Verarbeitungs-Aufgabe, umfassend jeweilige Verarbeitungs-Daten, die Sensordaten und dem jeweiligen, zumindest einem Verarbeitungs-Parameter, durch die Rechenvorrichtung (CPU),
e) Bereitstellen der Verarbeitungs-Vorlagen an die Edge-Vorrichtung (E), durch die Rechenvorrichtung (CPU),
f) Ausführen der Verarbeitungs-Vorlagen mithilfe der jeweiligen Verarbeitungs-Parameter durch die Edge-Vorrichtung (E), und Erhalten von Verarbeitungs-Ergebnissen (PR) für die Sensordaten aus den Verarbeitungs-Vorlagen (TP).

3. Verfahren nach einem der vorhergehenden Ansprüche, wobei der zumindest eine Verarbeitungs-Parameter durch eine Funktions-Dekorierung als Python-Design-Muster gebildet ist.

4. Verfahren nach einem der vorhergehenden Ansprüche, wobei der zumindest eine Verarbeitungs-Parameter eine zeitliche Information umfasst, beispielsweise eine Verarbeitungs-Priorität, eine vorbestimmte Start-Zeit oder End-Zeit für die Verarbeitung, ein Verarbeitungs-Zeitbereich oder eine Verarbeitungs-Wiederholung.

5. Verfahren nach einem der vorhergehenden Ansprüche, wobei der zumindest eine Verarbeitungs-Parameter eine Information hinsichtlich eines Auslöse-Kriteriums für die Verarbeitung an der Edge-Vorrichtung (E) umfasst, beispielsweise eine logische oder manuelle Auslöse-Bedingung, oder der Empfang einer auslösenden Nachricht, welche von der Edge-Vorrichtung (E) durch eine entsprechende, mitumfasste Empfangsvorrichtung empfangen wird.

6. Verfahren nach einem der vorhergehenden Ansprüche, wobei der zumindest eine Verarbeitungs-Parameter eine Information hinsichtlich einer Ressourcen-Bedingung für die Verarbeitung an der Edge-Vorrichtung (E) umfasst, beispielsweise eine Prozessor-Art an der Edge-Vorrichtung (E) wie eine GPU oder eine spezielle CPU, ein erforderlicher Speicher-Bedarf oder Speicher-Zugriff wie lokaler Speicher oder Cloud-Speicher.

7. Verfahren nach einem der vorhergehenden Ansprüche, wobei der zumindest eine Verarbeitungs-Parameter eine Information hinsichtlich einer Konfiguration für die Verarbeitung an der Edge-Vorrichtung (E) umfasst, beispielsweise eine Kombination von Verarbeitungs-Daten, Software und Ressourcen an der Edge-Vorrichtung (E).

8. System zur automatisierten Verarbeitung von Verarbeitungs-Aufgaben auf Basis künstlicher Intelligenz an einer Edge-Vorrichtung (E), umfassend eine Rechenvorrichtung (CPU) mit einem Prozessor und einem Speicher und eine verbundene technische Vorrichtung (TD) oder Sensor-Vorrichtung (SD), wobei das System dazu eingerichtet ist, das Verfahren nach einem der Ansprüche 1 oder 3 bis 7 auszuführen.

9. System zur automatisierten Verarbeitung von Verarbeitungs-Aufgaben auf Basis künstlicher Intelligenz oder maschinellem Lernen an einer Edge-Vorrichtung (E), umfassend eine Rechenvorrichtung mit einem Prozessor und einem Speicher und eine verbundene Sensor-Vorrichtung (SD), wobei das System dazu eingerichtet ist, das Verfahren nach einem der Ansprüche 2 bis 7 auszuführen.

10. System nach einem der Ansprüche 8 oder 9, wobei die Rechenvorrichtung (CPU) von der Edge-Vorrichtung (E) umfasst ist.

11. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 7 auszuführen.

12. Computer-implementierte Datenstruktur zur automatisierten Verarbeitung von Verarbeitungs-Aufgaben auf Basis künstlicher Intelligenz oder maschinellem Lernen an einer Edge-Vorrichtung (E) in Form einer Verarbeitungs-Vorlage zur Verwendung im Verfahren nach einen der Ansprüche 1 bis 7, umfassend Verarbeitungs-Daten, aufweisend Programmcodes, Modelle, Trainingsdaten und/oder Testdaten, und zugehörigen Ausführungs-Parametern, und zumindest einem Verarbeitungs-Parameter, welcher die Ausführung einer Menge von Verarbeitungs-Aufgaben durch eine Edge-Vorrichtung (E) beschreibt.

13. Datenstruktur nach dem vorhergehenden Anspruch, wobei zumindest ein, bevorzugt zumindest zwei oder drei, besonders bevorzugt zumindest vier oder fünf der nachfolgenden Parameter enthalten sind:
- Daten zu Orchestrierung von Verarbeitungs-Vorlagen an der Edge-Vorrichtung (E),
- Artefakte bezüglich einer Verarbeitungs-Aufgabe,
- Meta-Daten zu Verarbeitungs-Daten,
- Angaben zum zeitlichen Verlauf einer Verarbeitungs-Aufgabe,
- Angaben zu Nachrichten zur Steuerung einer Verarbeitungs-Aufgabe,
- Angaben zu Ressourcen der Edge-Vorrichtung (E), und/oder der verbundenen technischen Vorrichtung (TD), und/oder der Sensor-Vorrichtung (SD).
